# EUROPEAN PATENT APPLICATION

(11) **EP 2 752 448 A1**
(43) Date of publication of application: **09.07.2014**
(21) Application number: 13306751.2
(22) Date of filing: 18.12.2013
(51) Int. Cl.: C08K 5/14, H01B 13/08, H01B 1/12, H01B 7/14, H01B 9/02, H01B 13/00, C08L 23/06, C08L 23/12

(54) **Field grading layer**

(30) Priority: 02.01.2013 NO 20130009
(71) Applicant: Nexans, 75008 Paris (FR)
(72) Inventor: SONERUD, Björn, 41473 Göteborg (SE); FURUHEIM, Knut Magne, 1613 Fredrikstad (NO)
(74) Representative: Allain, Laurent

(57) **Abstract**

Method of applying a field grading layer to a power cable is disclosed. The method comprises
- compounding a polymer composition comprising a polymer matrix material, at least one non-linear conductive organic filler, and at least one crosslinking agent,
- extruding the compounded polymer composition into a crosslinkable field grading tape,
- winding the crosslinkable field grading tape onto a section of power cable in need of field grading
- curing and crosslinking the crosslinkable tape to obtain a field grading layer.

## Description

The present invention relates to a method for applying a field grading layer, a cable with a field grading layer and a field grading tape.

Especially the present invention relates to a field grading layer applicable for high voltage terminations and factory joints for DC applications. These field joints are applicable for instance in subsea connections.

### Background

Field grading layers are commonly used in AC and DC accessories including cables to control the electric field.

To obtain this effect the field grading layer is made of a material which has a non-linear conductivity, or in other words a resistivity that depends on the strength of the electric field.

The field grading layer can be made of a material comprising insulating and non-linear conductive elements and optionally additional conductive elements or the field grading layer can be made of a single material with non-linear properties.

At cable joints/terminations not only the conductors must be connected but also the field grading layers must be terminated and connected to ground and to the high voltage conductor.

### Prior art

In the cable industry when preparing pre-moulded accessories a common production method for preparing field grading comprises using inorganic filler in an elastomeric matrix. Nonlinear mastics are also used for medium voltage AC applications to provide field grading layers.

US2010/0147556 describes field grading materials comprising a dielectric polymer matrix including a plurality of micro varistor particles and a plurality other conductive particles referred to as bridging particles. The resistivity of the varistor particles strongly depend on the strength of the electric field, whereas the bridging particles do not have this field dependency but influences the general conductivity of the field grading material. The varistor particles accordingly provides the non-linear properties whereas the bridging particles provides electrical "bridges" between the varistor particles. The exemplified varistor particles are inorganic particles of SiC and ZnO. Examples of bridging particles include carbon black, and inorganic oxides such as TiO₂, antimony doped SnO₂.

US2003/0096123 discloses a thermosetting composition comprising capped poly(arylene ether) alkenyl aromatic monomer, alkoxylated acryloyl monomer, which further may comprise conducting agents such as carbon black and polyaniline.

EP0512662A2 discloses application of conductive polymer tape in conjunction with a protective shield layer comprising metallic braided or served mesh. The conductive polymer may comprise polyaniline. Here the shield layer mainly consists of the metallic braided or served mesh and the conductive polymer serves to improve the effectiveness of the shielding.

US2009/0056973 discloses a multiphase semiconductor shield composition with conductive filler including carbon black and polyaniline. The polymer comprises two phases one of them may be low density poly ethylene (LDPE).

EP0961302A2 discloses including polyaniline in a polymer to provide a material with non-linear resistance for an electrical coil, the application method is not disclosed in details.

EP0645781 discloses a power cable with an extruded polymer insulation arranged between the semiconductive screen covering the conductive core and an outer semiconducting screen. The insulation comprises a combination of an insulative polymer matrix and at least one conductive polymer such as polyaniline.

The prior art methods of compounding and moulding the field layer of an elastomeric matrix gives rise to thermal stress on the conductive filler which reduces the conductive properties of the filler. Therefore the conductive fillers had to be selected from materials able to withstand the thermal stress, resulting in the selection of inorganic fillers with high thermal stability. However due to the material differences inorganic fillers are not or limited wetted by the organic polymer matrix.

Accordingly there exists still a need for an alternative field grading layer application method which induces less thermal stress on the filler, thereby increasing the assortment of fillers applicable, preferably including fillers with increased wettablity by the polymer matrix.

### Objectives of the invention

An aim of the present invention is to provide an alternative method for preparation and application of a field grading layer.

Further the method should be applicable for applying field grading layers at cable terminations and joints.

The method of applying field grading layers should provide means of fast, robust and simple application of a field grading layer to a cable.

A further objective is to provide improved adhesion between filler and polymer matrix.

It also an objective to improve the adhesion between the insulation layer and the field grading layer.

The present invention provides a method of applying a field grading layer to a power cable comprising
- compounding a polymer composition comprising a polymer matrix material, at least one non-linear conductive organic filler, and at least one crosslinking agent,
- extruding the compounded polymer composition into a crosslinkable field grading tape,
- winding the crosslinkable field grading tape onto a section of power cable in need of field grading
- curing and crosslinking the crosslikable tape to obtain a field grading layer.

Examples of field grading materials comprising two or more elements include a combination of a non-conductive (insulative) matrix polymer such as polyethylene, polypropylene, or poly methyl (meth)-acrylate with at least one non-linear conductive filler and optionally one or more passive conductive fillers which influences the general conductivity but which do not contribute to the non-linear dependency. Examples of such passive conductive fillers include carbon black, and graphite or an intrinsically conductive polymer such as aniline.

Examples of organic materials with non-linear conductivity include the base form of polyaniline emeraldine base(PANI-EB).

In one aspect of the invention the polymer matrix material is selected from polyolefins and copolymers thereof, wherein the polyolefines are preferably selected from the group comprising polypropylene, polyethylene, LDPE, and XLPE. More preferably selected from the group comprising polyethylene, LDPE, and XLPE. Preferably the polymer matrix material is LDPE and the outer surface of the section of the power cable in need of field grading is made of XLPE. Here the XLPE is applied to the power cable as an insulation layer.

In another aspect of the method the at least one non-linear conductive organic filler is selected from the group comprising polyaniline emeraldine base (PANI-EB), polyaniline emeraldine salt (PANI-ES) or mixtures thereof.

In a further aspect of the present invention the polymer composition further optionally comprises at least one passive conductive filler. In yet a further aspect the at least one passive conductive filler is selected from the group comprising carbon black, graphite, antimony doped tin oxide or mixtures thereof.

In yet another aspect of the method the at least one crosslinking agent is an organic peroxide selected from the group comprising dialkyl peroxides; including, dicumyl peroxide, t-butyl cumyl peroxide, di (tert-butylperoxyisopropyl)benzene, di-tert-butyl peroxide and mixtures thereof.

In a further aspect the section of the power cable comprises an outer layer of polymeric insulation material, and where the crosslinking of the tape results in crosslinkage to the insulation material.

In one aspect of the method according to the present invention the curing and crosslinking is performed by heating, where the heating time necessary to obtain the crosslinking is significantly reduced compared to crosslinking a traditional applied elastomer based field grading layer.

Further the present invention provides a power cable comprising a central conductor, an insulation layer surrounding the circumference of the conductor, an inner semiconducting layer arranged in between the conductor and the insulation layer, and on a first section of the power cable a field grading layer on the outer surface of the insulation, where the field grading layer comprises a non-linear conductive organic filler and is crosslinked internally and crosslinked to the insulation layer.

In another aspect of the power cable according to the present invention, the power cable on a second section comprises an outer semiconducting layer arranged radially outside the insulation layer, and wherein the field grading layer is in electrical contact with the outer semiconducting layer and in electrical contact with the conductor.

As it is well known for with in the art the field grading layer needs to be in electrical contact with a grounded outer semiconductive screen arranged radially outside the insulation layer on the part of the cable not supplied with the field grading layer. Further the field grading layer is in electrical contact with the high voltage potential conductor. This allows the field grading layer to evenly distribute the electric field.

The present invention also provides a field grading tape comprising a polymer matrix material, at least one non-linear conductive organic filler, and at least one crosslinking agent. In one aspect of the invention the polymer matrix material is selected from the group comprising polyolefines or co-polymers thereof, preferably selected from the group comprising polypropylene, polyethylene, LDPE, and XLPE. Preferably the polymer matrix material is LDPE. In a further aspect the at least one crosslinking agent is an organic peroxide selected from the group comprising dialkyl peroxides; including, dicumyl peroxide, t-butyl cumyl peroxide, di (tert-butylperoxyisopropyl)benzene, di-tert-butyl peroxide and mixtures thereof.

Use of the method according to the present invention or the field grading tape according to the present invention to provide a field grading layer on a cable termination and /or a subsea cable joint.

The term "field grading" as used here in the terms "field grading tape" and "field grading layer" refers to the properties of the material. The "field grading" has a non-linear conductivity which provides active control of the electrical field. Accordingly the term "field grading layer" describes the use of a layer with non-linear field dependent conductivity to actively control the electric field.

The term "non-linear conductive organic filler" as used here refers to an organic compound with a non-linear conductivity. Accordingly the non-linear conductive organic filler is the active compound in the polymer composition providing the field grading.

The term "passive conductive filler" as used here refers to a compound which can be either organic or inorganic and which provides conductivity between the non-linear conductive organic filler elements but which does not contribute significantly to the non-linear conductivity of the polymer composition.

The term "tape" as employed here refers to a flat band of material which can be applied to a cable with a generally circular circumference by winding the tape unto the surface of the cable or a part thereof.

### Brief description of the drawings

The enclosed figures illustrate one embodiment of the present invention.

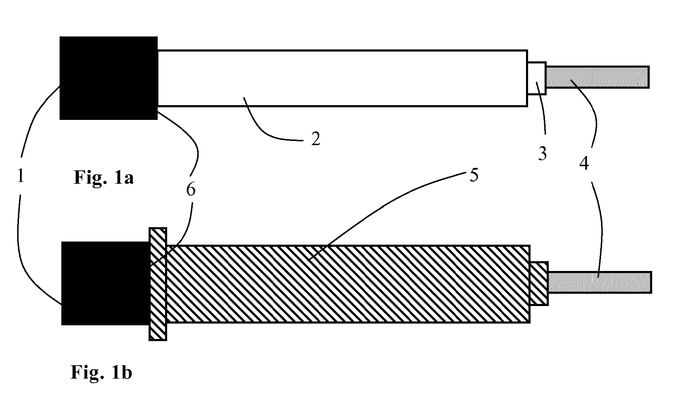

Figure 1a illustrates a cable termination prior to the application of a tape according to one embodiment of the present invention;
Figure 1b illustrates the same cable termination as figure 1a but after a field grading tape according to the present invention has been applied to the cable termination.

### Principal description of the invention

The present invention will now be described in further details. Compounding and especially crosslinking of organic filler in elastomer matrix according to the prior art method for preparing premoulded joints or stress cones induces stress to the organic filler and reduces the conductive properties of the filler. When moulding the elastomeric matrix containing the organic filler a high temperature has to be maintained for a long time (often more than one hour) to achieve crosslinking. One reason for this is that premoulded joints are quite large and the thermal inertia of the system causes the temperature to be maintained for an extended time.

According to one aspect of the present invention a tape is produced by compounding organic conducting filler in a LDPE (low density poly ethylene) matrix which is then extruded into tape. This tape is according to this aspect of the present invention applied to the element in need of a field grading layer and then crosslinked. The thin tape can be crosslinked with in a considerable shorter time period (5-20 minutes) which induces less thermal stress on the filler than the moulding of organic filler in an elastomer according to the prior art.

In one aspect of the present invention the LDPE for the tape is of the same type or equivalent to the polymer employed in the insulation of cable or joint, thereby improving the compatibility and the adhesion of the different parts. The insulation is preferably made of crosslinked poly ethylene (XLPE). The LDPE may further comprise a peroxide to facilitate the crosslinking.

Also, due to the organic nature of the filler dispersion and compounding is simpler than using inorganic filler. Adhesion and integration with the surrounding matrix is better with organic filler, due to better wetting of the organic particles by the matrix. Making a tape instead of using an elastomer makes it possible to use application techniques well known from the manufacturing of factory joints using crosslinked poly ethylene (XLPE) tape. This reduces the time which the organic filler is subjected to high temperature during application, allowing a higher degree of nonlinearity to remain through crosslinking and compounding. Crosslinking also ensures good adhesion between the cable insulation and the field grading tape and some amount of crosslinking will also occur between the tape and the previously extruded and crosslinked insulating material.

In one embodiment of the present invention a tape is prepared by compounding LDPE with a peroxide and one or more conductive organic fillers and forming a tape thereof.

Applicable peroxides include but are not limited to organic peroxide type, more specific from the group of dialkyl peroxides; including, but not limited to: Dicumyl peroxide, t-butyl cumyl peroxide, di (tert-butylperoxyisopropyl)benzene, and di-tert-butyl peroxide.

In the manufacturing process of factory joints used in subsea high voltage cables an extruded polyethylene tape is used. This polyethylene with peroxides for crosslinking can be modified into a field grading layer by adding organic filler in the form of polyaniline together with carbon black to further tailor the nonlinear properties. This tape is then applied to the cable, heated to initiate crosslinking and cross bonded into a homogenous layer which also cross bonds to the insulating material. After application, conventional terminations, premoulded joints or factory joints can be applied on top of the layer.

Figures 1a and 1b illustrates schematically a cable termination making use of the present invention. Figure 1 a illustrates a power cable comprising a central conductor 4, radially surrounded by an inner semiconducting layer 3, surrounded radially by and insulation layer 2 which initially is surrounded radially with an outer semi conducting layer 1. To allow for termination of the cable the outer semiconducting layer has been removed from a part of the illustrated end section of the cable. At the termination end also a section of the insulator layer and the inner semiconducting layer have been removed providing a section of the conductor for electrical connection.

As an example conventional LDPE with peroxide is compounded with organic filler to obtain a cross-linkable tape. In the termination the tape would be applied as indicated below in figure 1b forming the field grading layer 5. A conventional stress cone for ac terminations can then be mounted on top of the tape layer 5. As illustrated the field grading layer 5 is in electrical contact with the outer semiconducting layer 1 at the end 6 of the outer semiconducting layer. Close to the termination end the field grading layer 5 is in electrical contact with the conductor 4.

Application of field grading material as a cross bonded tape as compared with elastomer matrix has the following advantages:
- excellent adhesion between insulation and field grading layer
- simpler application process as there is no need to mould a separate accessory
- less thermal stress on the nonlinear organic filler during preparation of the tape as compared with preparing a premoulded accessory

Compared with field grading materials using inorganic filler the adhesion between the polymer matrix and the filler can be improved when using a polymeric (organic) filler.

The present invention is especially a feasible technique for joints and terminations for subsea cables, which benefit from the improved non-linear properties.

### Examples

In the manufacturing process of factory joints used in subsea high voltage cables an extruded polyethylene tape is used. This polyethylene with peroxides for crosslinking can be modified into a field grading layer by adding organic filler in the form of polyaniline together with carbon black to further tailor the nonlinear properties. This tape can then be applied to the cable, heated to initiate crosslinking and cross bonded into a homogenous layer which also cross bonds to the insulating material. After application, conventional terminations, premoulded joints or factory joints can be applied on top of the layer.

Polyaniline emeraldine base/ethylene propylene diene monomer (PAni-EB /EPDM) compound has proved to remain non-linear and conductive after crosslinking and at aging temperatures up to 90 degrees.

PAni-EB/XLPE tape is currently being evaluated. The same peroxide is used in both XLPE and EPDM. Results showing that the PAni-EB/XLPE compound remains nonlinear and conductive at high field is expected.

## Claims

1. Method of applying a field grading layer to a power cable comprising
- compounding a polymer composition comprising a polymer matrix material, at least one non-linear conductive organic filler, and at least one crosslinking agent,
- extruding the compounded polymer composition into a crosslinkable field grading tape,
- winding the crosslinkable field grading tape onto a section of power cable in need of field grading
- curing and crosslinking the crosslikable tape to obtain a field grading layer.

2. Method according to claim 1, wherein the polymer matrix material is selected from polyolefins and copolymers thereof.

3. Method according to claim 2, wherein the polyolefins are selected from the group comprising polypropylene, polyethylene, LDPE, and XLPE.

4. Method according to any one of the preceding claims, wherein the at least one non-linear conductive organic filler is selected from the group comprising polyaniline emeraldine base (PANI-EB), polyaniline emeraldine salt (PANI-ES) or mixtures thereof.

5. Method according to any one of the preceding claims, wherein the polymer composition further comprises at least one passive conductive filler.

6. Method according to any one of the preceding claims, wherein the at least one passive conductive filler is selected from the group comprising carbon black, graphite, antimony doped tin oxide, TiO₂ or mixtures thereof.

7. Method according to any one of the preceding claims, wherein the at least one crosslinking agent is an organic peroxide selected from the group comprising dialkyl peroxides; including, dicumyl peroxide, t-butyl cumyl peroxide, di (tert-butylperoxyisopropyl)benzene, di-tert-butyl peroxide and mixtures thereo f.

8. Method according to any one of the preceding claims, wherein the section of the power cable comprises an outer layer of polymeric insulation material, and where the crosslinking of the tape results in crosslinkage to the insulation material.

9. Power cable comprising a central conductor, an insulation layer surrounding the circumference of the conductor, an inner semiconducting layer arranged in between the conductor and the insulation layer, and on a first section of the power cable a field grading layer on the outer surface of the insulation, where the field grading layer comprises an non-linear organic conductive filler and is crosslinked internally and crosslinked to the insulation layer.

10. Power cable according to claim 9, wherein the power cable on a second section comprises an outer semiconducting layer, and wherein the field grading layer is in electrical contact with the outer semiconducting layer and in electrical contact with the conductor.

11. Field grading tape comprising a polymer matrix material, at least one non-linear conductive organic filler, and at least one crosslinking agent.

12. Field grading tape according to claim 11, wherein the tape further comprises a at least one passive conductive filler.

13. Field grading tape according to claim 11 or 12, wherein the polymer matrix material is selected from polyolefines and copolymers thereof.

14. Field grading tape according to claim 13, wherein the polyolefines are selected from the group comprising polypropylene, polyethylene, LDPE, and XLPE.

15. Field grading tape according to claim 11, 12, 13 or 14, wherein the at least one non-linear conductive organic filler is selected from the group comprising polyaniline emeraldine base (PANI-EB), polyaniline emeraldine salt (PANI-ES) or mixtures thereof.

16. Use of the method according to one of the claims 1-8 or the field grading tape according to one of the claims 11-15 to provide a field grading layer on a cable termination or a subsea cable joint.
